# EUROPEAN PATENT APPLICATION

(11) **EP 3 693 864 A1**
(43) Date of publication of application: **12.08.2020**
(21) Application number: 18864668.1
(22) Date of filing: 04.10.2018
(51) Int. Cl.: G06F 13/00, H04N 21/238, H04N 21/647

(54) **DATA COMMUNICATION DEVICE, COMMUNICATION SYSTEM, DATA COMMUNICATION METHOD, AND PROGRAM**

(30) Priority: 06.10.2017 JP 2017195660
(71) Applicant: NEC Corporation, Tokyo 108-8001 (JP)
(72) Inventor: OHNO, Yuki, Tokyo 108-8001 (JP)
(74) Representative: MacDougall, Alan John Shaw
(86) International application number: PCT/JP2018/037162
(87) International publication number: WO 2019/070017

(57) **Abstract**

There is provided a data communication apparatus that maintain QoE for a user even in a situation where sudden deterioration occurs in a network environment. The data communication apparatus comprising: a transmission-reception part configured to transmit and receive data between a client terminal and a server, a first determination part configured to determine whether or not a data transmission from the server to the client terminal is based on an ABR (Adaptive Bit Rate) distribution scheme, a second determination part configured to determine whether or not a received data from the server maintains regularity of the ABR distribution scheme, in a case where the data transmission from the server to the client is based on the ABR distribution scheme, a scheme determination part configured to determine the data transmission scheme upon transmitting the received data from the server to the client terminal according to a result by the second determination part, wherein the transmission-reception part is configured to transmit the received data from the server to the client by the data transmission scheme determined by the scheme determination part.

## Description

### [TECHNICAL FIELD]

### (CROSS-REFERENCE TO RELATED APPLICATIONS)

The present invention is based upon and claims the benefit of the priority of Japanese Patent Application No. 2017-195660 (filed on 6th October 2017), the disclosure of which is incorporated herein in its entirety by reference.

The present invention relates to a data communication apparatus, communication system, data communication method, and program.

### [BACKGROUND ART]

Patent Literature(PTL) 1 discloses a technique for maintaining QoE (Quality of Experience) for a user. The technique disclosed in Patent Literature 1 aims to start smoothly for viewing a video image by quickly filling a buffer of a mobile apparatus (client, terminal) used by the user at the start timing for viewing the video image. The literature discloses that a received data is transmitted all at once without performing a pacing process as far as a first data transmission session. Here, the pacing process is a means for controlling a data transmission speed in real time according to a data transmission-reception status.

In recent years, a content distribution technology called ABR (Adaptive Bit Rate) has been developed. Non-Patent Literature 1 describes HTTP(Hyper Text Transfer Protocol) Live Streaming (HLS) that is an example of ABR distribution scheme. In the content distribution by HLS, a single content is divided into a plurality of segment files, and each of divided segment files is transmitted to a client terminal. Also in HLS, a playlist file(s) that describes URLs (Uniform Resource Locator) of each of segment files in the content in order of reproduction time, the segment files that correspond to a plurality of types of files having different bit rates for the content, and a variant playlist file that describes URLs of the playlist files corresponds to each bit rate are used. The client terminal acquires the variant playlist file and selects a playlist file corresponding to a bit rate suitable for a viewing environment from the playlist files that are described in the files. The client terminal sequentially acquires the segment files described in the selected playlist file and reproduces the content.

Patent Literature 2 discloses a technique for determining an optimum bit rate for data (packets) transmitted by the ABR distribution scheme. Patent Literature 2 discloses that an optimum transmission bit rate is calculated from a file length or the like in each of file units divided by ABR, and that each of the divided files is transmitted in accordance with the bit rate.

Patent Literature 3 discloses a technique for addressing a problem that for the video distribution by HTTP (Hypertext Transfer Protocol), in a case where a download speed of the video file information is lower than a reproduction speed, the reproduction of video stops (freezes) on the client terminal.
Patent Literature 3 discloses a system comprising a function of monitoring an actual transfer speed, and a function of performing re-encoding by confirming the reproduction speed of the video to be transmitted. In the technology disclosed in Patent Literature 3, stopping of the reproducing video image is prevented by letting the actual transmission speed always exceed the video image reproduction speed by using both of these functions.

### [CITATION LIST]

### [PATENT LITERATURE]

[PTL 1] Japanese Patent Publication No. 2016-100681A
[PTL 2] Japanese Patent Publication No. 2016-219915A
[PTL 3] Japanese Patent Publication No. 2015-154395A

### [NON PATENT LITERATURE]

[NPL 1] Apple Inc, "Abstract of HTTP Live Streaming" [Online], [Search result as of 1th Aug. 2018], Internet: <URL:https://developer.apple.eom/jp/documentation/StreamingMediaGuide.p df>

### [SUMMARY]

### [TECHNICAL PROBLEM]

Each disclosure of the above-listed Citation List is incorporated herein in its entirety by reference. The following analysis has been made by the inventors.

In the technologies disclosed in Patent Literatures 1 and 2, external disturbance (in particular, deterioration) of a network environment during the data transmission is not envisaged. That is, Patent Literatures 1 and 2 do not mention on stopping and restarting of the pacing process during a session. The fact means that in the technologies disclosed in Patent Literature 1 and 2, data distribution by a bit rate assumed from the beginning continues. As a result, in a case where the techniques disclosed in Patent Literature 1 and 2 are applied to a general network environment in which external disturbance occurs, following problems may occur.

In ABR traffic (a plurality of packets or data in a same session transmitted by the ABR distribution scheme), a data communicating term and a no-communicating term occur alternately and regularly as will be described later. However, in the general network environment, for example, a data reception interval from a distribution source server (OS; Origin Server) may become longer than assumed. In such a case, a situation in which a mobile terminal cannot receive the packets at a bit rate originally assumed as in the regularity of ABR traffic may suddenly appear.

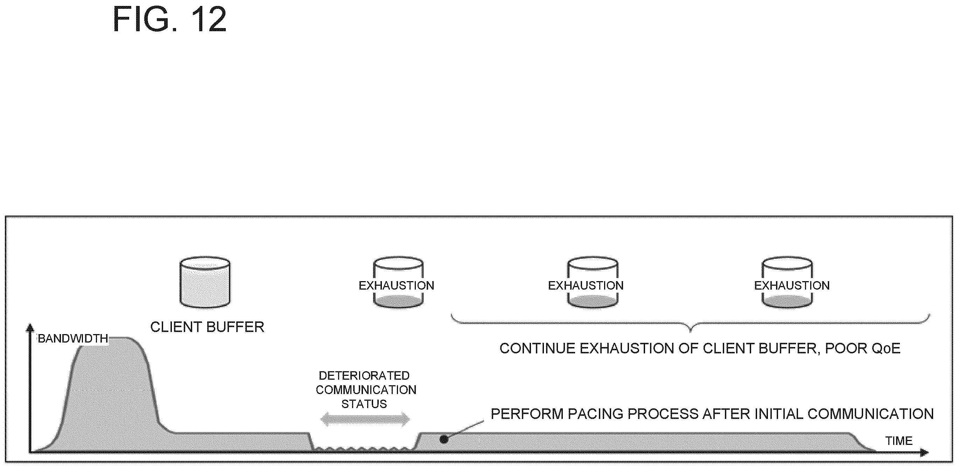

For example, as shown in Fig.12, consider a case in which data is received after lapse of a vacant interval of data reception from the distribution source server while pacing process is being performed after an initial communication. In this case, in a case where the distribution source server continuously performs the pacing process to transmit the data to the mobile terminal, there is a possibility that a buffer in the mobile terminal is intermittently exhausted and the video reproduction is interrupted. In particular, in a case where the video reproduction speed in the mobile terminal is faster than the data reception speed in the mobile terminal, the possibility of occurrence in which the above mentioned problem (interruption of the reproducing video image) increases. As a result, QoE for the user who is watching the video image is significantly reduced.

Further, the technique disclosed in Patent Literature 3 has a problem that stop of the reproducing video image occurs in the communication which includes no-communicating term, such as in ABR traffic. In a case where the technique disclosed in Patent Literature 3 is applied to the ABR traffic, an actual transmission rate becomes zero in the no-communicating term. As a result, the video image transmission speed to the mobile terminal becomes zero regardless of the reproduction speed. In this case, since the mobile terminal cannot receive the video data, the reproduction will stop (freeze).

A main object of the present invention is to provide a data communication apparatus, a communication system, a data communication method, and a program that contribute to maintain QoE for a user even in a situation where deterioration in a network environment occurs suddenly.

### [SOLUTION TO PROBLEM]

According to a first aspect of the present invention or disclosure, a data communication apparatus is provided comprising: a transmission-reception part configured to transmit and receive data between a client terminal and a server, a first determination part configured to determine whether or not a data transmission from the server to the client terminal is based on an ABR (Adaptive Bit Rate) distribution scheme, a second determination part configured to determine whether or not a received data from the server maintains regularity of the ABR distribution scheme, in a case where the data transmission from the server to the client is based on the ABR distribution scheme, a scheme determination part configured to determine the data transmission scheme upon transmitting the received data from the server to the client terminal according to a result by the second determination part, wherein the transmission-reception part is configured to transmit the received data from the server to the client by the data transmission scheme determined by the scheme determination part.

According to a second aspect of the present invention or disclosure, a communication system is provided comprising: a client terminal, a server, a data communication apparatus configured to relay data between the client terminal and the server, wherein the data communication apparatus comprises: a transmission-reception part configured to transmit and receive data between the client terminal and the server, a first determination part configured to determine whether or not a data transmission from the server to the client terminal is based on an ABR (Adaptive Bit Rate) distribution scheme, a second determination part configured to determine whether or not a received data from the server is maintaining regularity of the ABR distribution scheme, in a case where the data transmission from the server to the client is based on the ABR distribution scheme, a scheme determination part configured to determine the data transmission scheme upon transmitting the received data from the server to the client terminal according to a result by the second determination part, wherein the transmission-reception part is configured to transmit the received data from the server to the client by the data transmission scheme determined by the scheme determination part.

According to a third aspect of the present invention or disclosure, a data communication method is provided for a data communication apparatus that comprises a transmission-reception part which transmits and receives data between a client terminal and a server, comprising: a step of ABR determining whether or not a data transmission from the server to the client terminal is based on an ABR (Adaptive Bit Rate) distribution scheme, a step of maintaining regularity determining whether or not a received data from the server is maintaining regularity of the ABR distribution scheme, in a case where the data transmission from the server to the client is based on the ABR distribution scheme, a step of scheme determining the data transmission scheme upon transmitting the received data from the server to the client terminal according to a result of maintaining regularity determining, and a step of transmitting the received data from the server to the client by the data transmission scheme determined by the scheme determining.

According to a fourth aspect of the present invention or disclosure, a program executed by a computer installed to a data communication apparatus that comprises a transmission-reception part which transmits and receives data between a client terminal and a server is provided, comprising: a process of ABR determining whether or not a data transmission from the server to the client terminal is based on ABR (Adaptive Bit Rate) distribution scheme, a process of maintaining regularity determining whether or not a received data from the server is maintaining regularity of the ABR distribution scheme, in a case where the data transmission from the server to the client is based on the ABR distribution scheme, a process of scheme determining the data transmission scheme upon transmitting the received data from the server to the client terminal according to a result of maintaining regularity determining, and a process of transmitting the received data from the server to the client terminal by the data transmission scheme determined by the process of transmission scheme determining.
This program can be recorded on a computer-readable storage medium. The storage medium can be set to a non-transient (non-transient) one such as a semiconductor memory, a hard disk, a magnetic recording medium, or an optical recording medium. The present invention can also be embodied as a computer program product.

### [ADVANTAGEOUS EFFECTS OF INVENTION]

According to each aspect of the present invention or disclosure, there are provided a data communication apparatus, a communication system, a data communication method, and a program that contribute to maintain QoE for a user even in a situation where deterioration of a network environment appears suddenly.

### [BRIEF DESCRIPTION OF DRAWINGS]

[Fig.1]

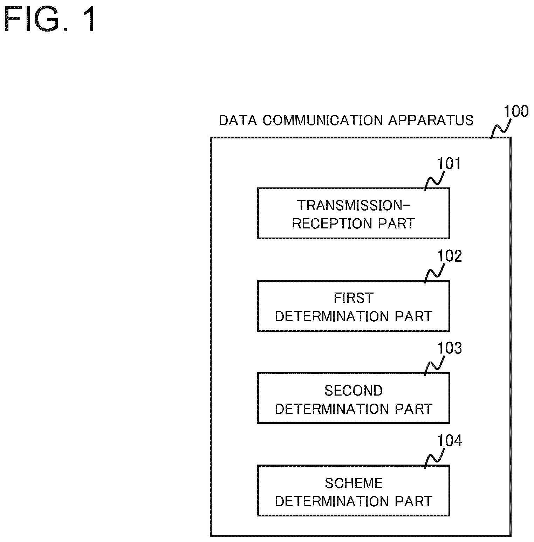

   Fig.1 is a diagram showing an outline of one exemplary embodiment.
[Fig.2]

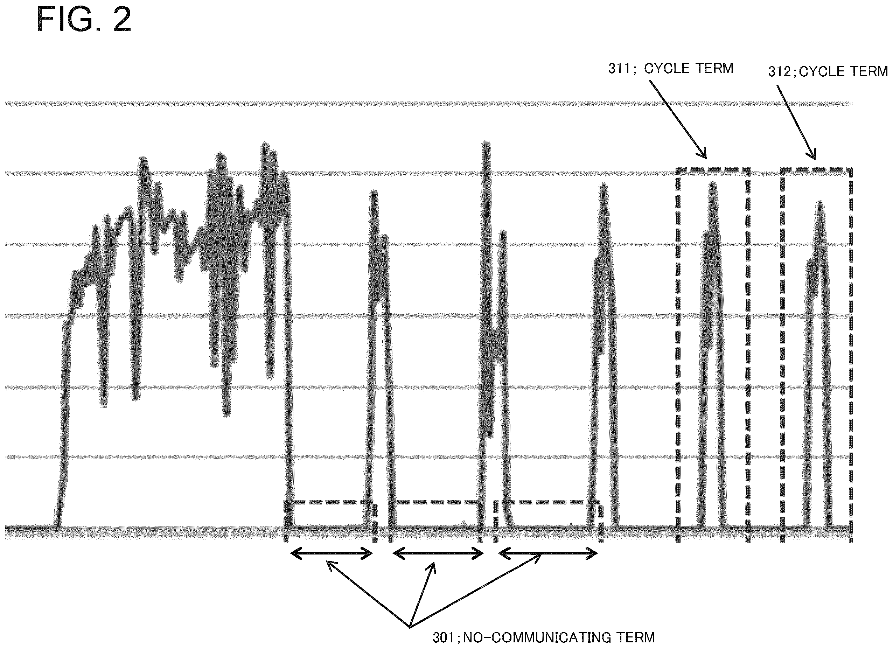

   Fig.2 is an example of schematic diagram showing a waveform(s) related to a received data amount by ABR traffic.
[Fig.3]

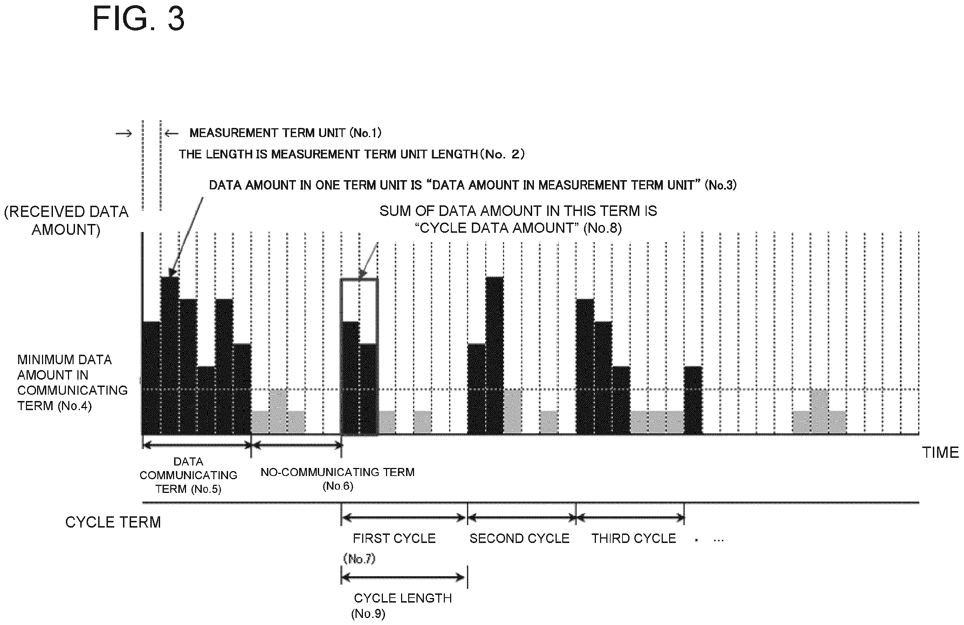

   Fig.3 shows a diagram to illustrate terms used in the present disclosure.
[Fig.4]

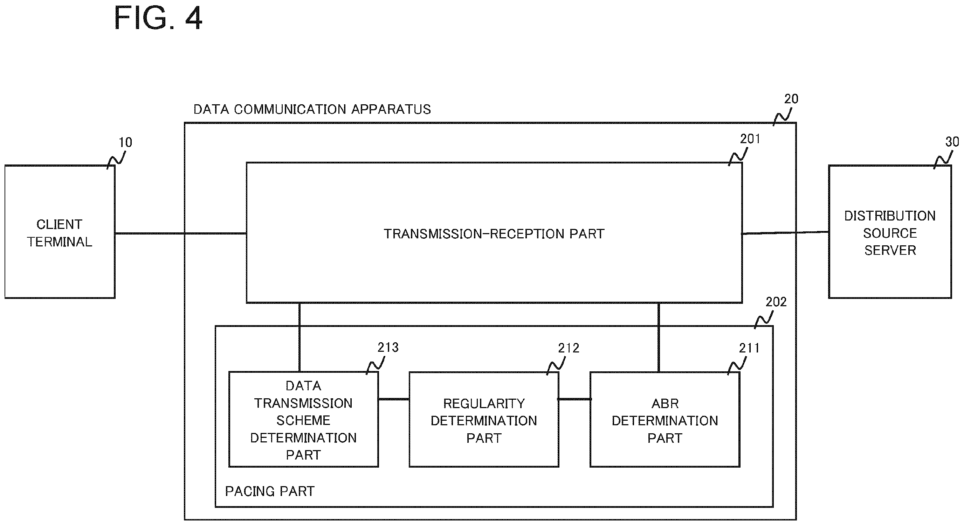

   Fig.4 is a diagram showing an example of a schematic configuration of a communication system according to a first exemplary embodiment.
[Fig.5]

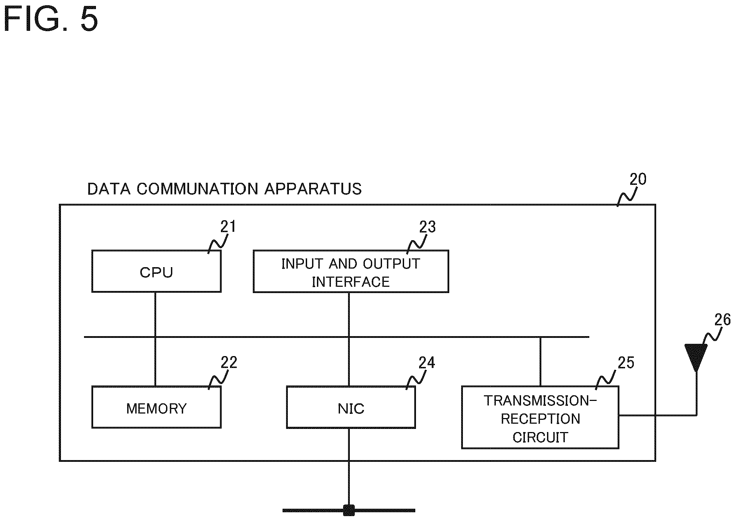

   Fig.5 is a block diagram showing an example of hardware configuration of a data communication apparatus according to the first exemplary embodiment.
[Fig.6]

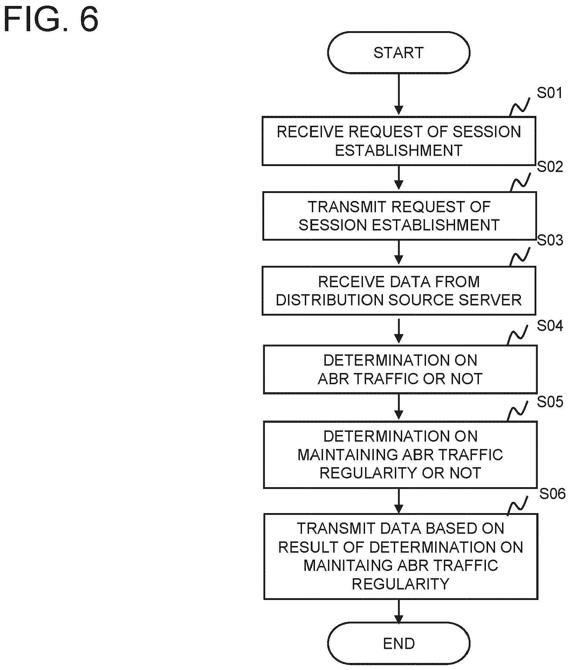

   Fig.6 is a flowchart showing an example of an operation(s) of the data communication apparatus.
[Fig.7]

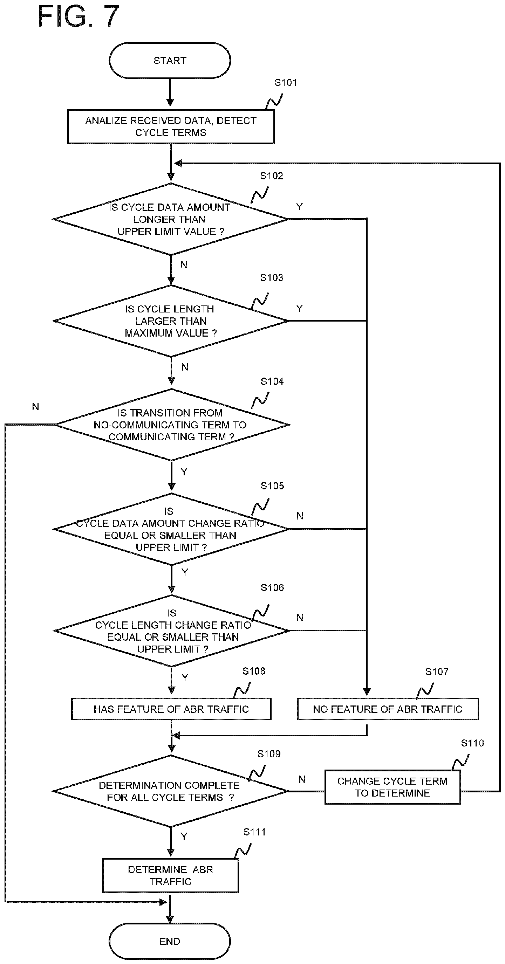

   Fig.7 is a flowchart showing an example of an operation(s) of an ARB determination part.
[Fig.8]

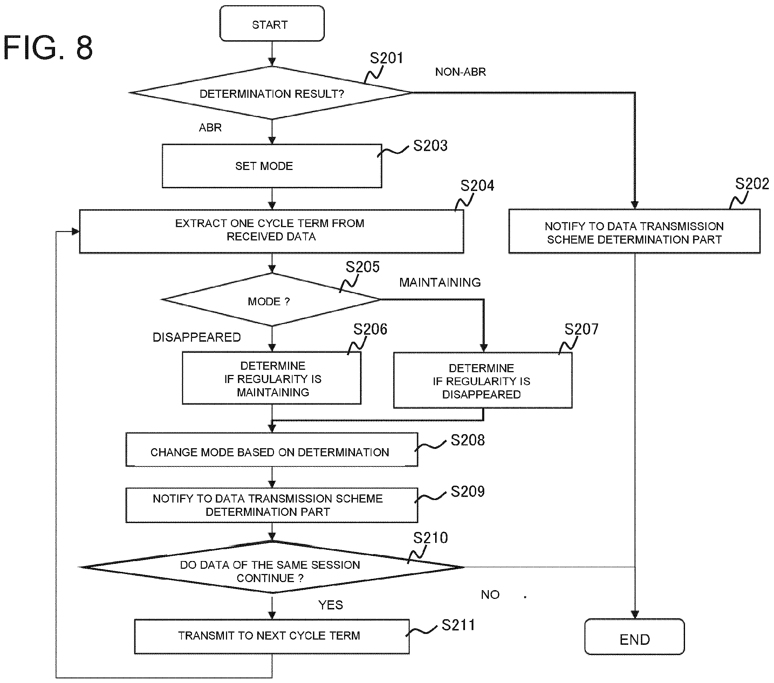

   Fig.8 is a flowchart showing an example of an operation(s) of regularity determination part.
[Fig.9]

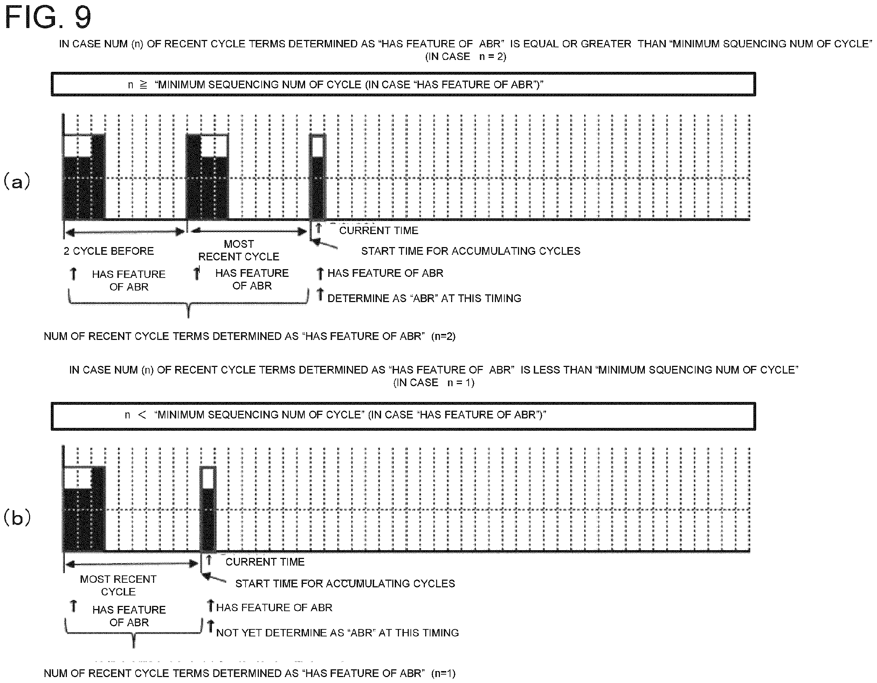

   Fig.9 is a diagram to explain the operations of regularity determination part.
[Fig.10]

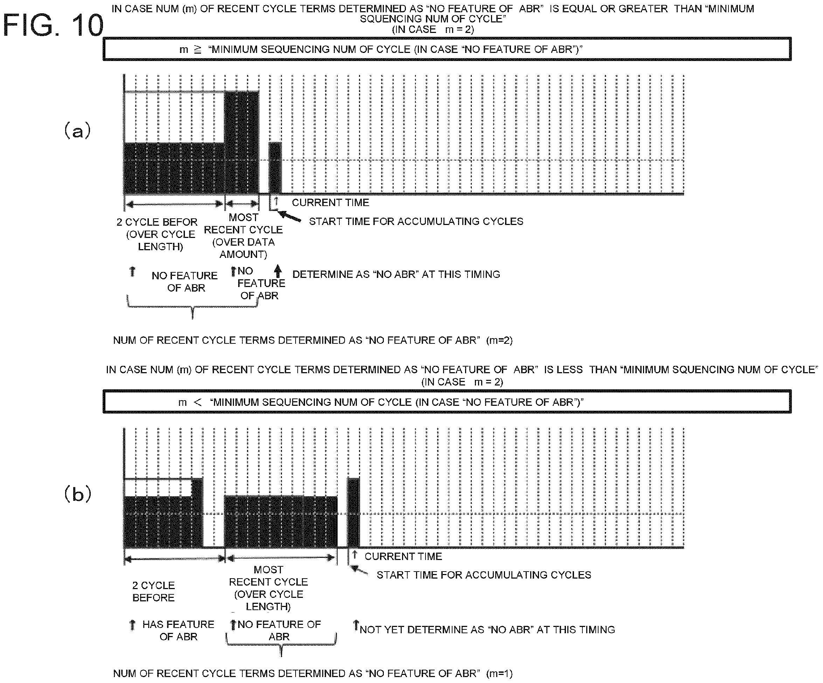

   Fig. 10 is a diagram to explain the operations of regularity determination part.
[Fig.11]

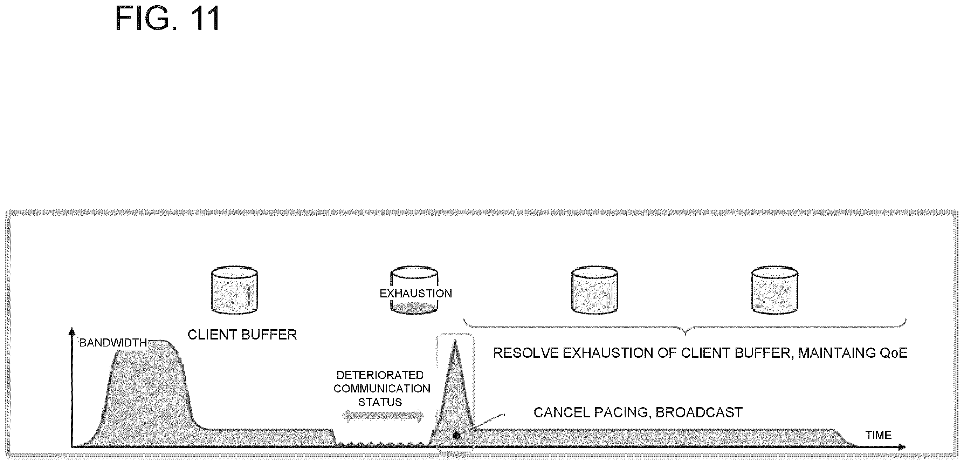

   Fig.11 is a diagram to explain an operation(s) of the data communication apparatus according to the first exemplary embodiment.
[Fig.12]
   Fig.12 is a diagram showing an example of a bandwidth variation in a case where a network environment is deteriorated.

### [DESCRIPTION OF EMBODIMENTS]

First, an outline of one exemplary embodiment will be described. The reference symbols of the drawings appended to this outline are added for the sake of convenience to each element as an example for aiding understanding, and the description of the outline is not intended to limit any way. Also, a connection line between blocks in each block diagram includes both bidirectional and unidirectional directions. The unidirectional arrows schematically indicate the flow of main signals (data), and do not exclude bidirectionality.

A data communication apparatus 100 according to one exemplary embodiment comprises a transmission-reception part 101, a first determination part 102, a second determination part 103, and a scheme determination part 104 (refer to Fig.1). The transmission-reception part 101 transmits and receives data between a client terminal and a server. The first determination part 102 determines whether or not a data transmission scheme from the server to the client terminal is based on an ABR (Adaptive Bit Rate) distribution scheme. The second determination part 103 determines whether or not the received data from the server is maintaining regularity of the ABR distribution scheme, in a case where the data transmission from the server to the client is based on the ABR distribution scheme. The scheme determination part 104 determines the data transmission scheme upon transmitting the received data from the server to the client terminal according to a result by the second determining part 103. The transmission-reception part 101 transmits the received data from the server to the client terminal by the data transmission scheme determined by the scheme determination part 104. The transmission-reception part 101 transmits the received data from the server to the client terminal by the data transmission scheme determined by the scheme determination part 104.

The data communication apparatus 100 determines, while in ABR traffic pacing process, whether or not the regularity of ABR traffic is maintained or has disappeared under a consideration, for example of an ABR traffic pattern (a feature that ABR traffic has). Thereafter, in a case where it is determined that the regularity of ABR traffic is not maintained (has disappeared), the data communication apparatus 100 terminates the pacing process. On the other hand, in a case where the regularity of ABR traffic is maintained, the data communication apparatus 100 performs the pacing process (continues the pacing process). That is, even in a case where a reception buffer of the client terminal is exhausted due to deterioration of a network environment or the like, a bandwidth limitation applied to ABR traffic is canceled and the data transmission is performed from the data communication apparatus 100, so that the reception buffer of the client terminal becomes abundant. As a result, a situation in which the reception buffer of the client terminal is intermittently exhausted can be prevented, and QoE for a user can be maintained even in a situation in which deterioration of the network environment suddenly occurs.

Subsequently, prior to a description of a concrete exemplary embodiment, the ABR traffic targeted in the present disclosure will be described.

Fig.2 is an example of schematic diagram of a waveform(s) relating to a received data amount by ABR traffic. By referring to Fig.2, at least two of following features can be confirmed in the waveforms by ABR traffic.

A first feature is that no-communicating terms periodically exist. In Fig.2 the no-communicating terms 301 are shown.

A second feature is that, by assuming that a term length (cycle) from a start of the data communicating term to an end of the no-communicating term as one term unit, the received data amount in a cycle subsequent to the cycle in which a large data amount has been received are approximately same. In Fig.2, it can be seen that a predetermined data amount is received in a cycle 311 and almost the same data amount is received in a subsequent cycle 312.

Further, the terms used in the present disclosure are defined as in Table 1 below.

**[Table 1]**

| No. | TERM | DESCRIPTION |
|---|---|---|
| 1 | MEASUREMENT TERM UNIT | Time term in which data is measured |
| 2 | MEASUREMENT TERM UNIT LENGTH | Time term length of MESUREMENT TERM UNIT |
| 3 | DATA AMOUNT IN MEASUREMENT TERM UNIT | Data amount received in MESUREMENT TERM UNIT |
| 4 | MINIMUM DATA AMOUNT IN COMMUNICATING TERM UNIT | Amount deemed as minimum data amount transmitted in MEASUREMENT TERM UNIT (Threshold) |
| 5 | DATA COMMUNICATING TERM | MESUREMENT TERM UNITs whose DATA AMOUNT IN MEASUREMENT TERM UNIT is equal or larger than MINUMUM DATA AMOUNT IN COMMUNICATING TERM UNIT |
| 6 | NO-COMMUNICATING TERM | MEASUREMENT TERM UNITs whose DATA AMOUNT IN MEASUREMENT TERM UNIT is smaller than MINUMUM DATA AMOUNT IN COMMUNICATING TERM UNIT |
| 7 | CYCLE TERM | Term from start of DATA COMMUNICATING TERM to end of NO-COMMUNICATING TERM |
| 8 | CYCLE DATA AMOUNT | Sum of DATA AMOUNT IN MEASUREMENT TERM UNIT for COMMUNICATING TERM in a CYCLE TERM, wherein maximum amount is set for CYCLE DATA AMOUNT (defined as MAXIMUM CYCLE DATA AMOUNT) |
| 9 | CYCLE LENGTH | Sum of MEASUREMENT TERM UNIT LENGTH for a CYCLE TERM, wherein upper limit length is set for CYCLE LENGTH (defined as MAXIMUM CYCLE LENGTH) |
| 10 | CYCLE DATA AMOUNT CHANGE RATIO | Change ratio of CYCLE DATA AMOUNT between sequencing CYCLE TERMs, wherein maximum change ratio is set for CHANGE RATIO (defined as MAXIMUM CYCLE DATA AMOUNT CHANGE RATIO) |
| 11 | CYCLE LENGTH CHANGE RATIO | Change ratio of CYCLE LENGTH between sequencing CYCLE TERMs, wherein upper limit is set for CHANGE RATIO (defined as MAXIMUM CYCLE LENGTH CHANGE RATIO) |

Fig.3 is a diagram for explaining the terms used in the present disclosure. Fig.3 shows relationships between the item number (No.) in the above table and the ABR traffic waveforms.

Hereinafter, concrete exemplary embodiments will be described in more detail with reference to the drawings. Note that in each exemplary embodiment, the same components are denoted by the same reference symbols, and the description thereof will be omitted.

### [First exemplary embodiment]

A first exemplary embodiment will be described in more detail with reference to the drawings.

### [System configuration]

Fig.4 is a diagram showing an example of a schematic configuration of a communication system according to the first exemplary embodiment. By referring to Fig.4, the communication system is configured by comprising a client terminal 10, a data communication apparatus 20, and a distribution source server 30.

The client terminal 10 and the data communication apparatus 20 are connected via a first network (not shown). The first network is typically a wireless network.

The data communication apparatus 20 and the distribution source server 30 are connected via a second network (not shown). The second network is typically a wired network.

Note that the first and second networks are not limited to the wireless network and the wired network. Of course, each apparatus may be connected by a network other than these.

The client terminal 10 is a terminal that supports the ABR distribution such as HLS. The terminal 10 requests data transmission to the distribution source server 30. The client terminal 10 receives the data transmitted as a result of the request. The terminal 10 selects a bit rate of a content to be received based on a playlist file (for example, a playlist file in HLS, a variant playlist file) distributed from the distribution source server 30. The client terminal 10 acquires a divided file(s) (TS files in HLS) according to the selected bit rate. The client terminal 10 reproduces the obtained divided files. Examples of the client terminal 10 include a smartphone, a mobile phone, a tablet, a personal computer, a television with a network connection function, and the like.

The distribution source server 30 is a server apparatus that supports the ABR distribution such as HLS. The distribution source server 30 is an apparatus that transmits data (encrypted data) including multimedia data (for example, video, audio, and the like) in response to the request from the client terminal 10. For example, the distribution source server 30 stores the divided files (TS file) corresponding to a plurality of bit rates for the certain content. Also, the distribution source server 30 stores the playlist files corresponding to each bit rate (the above mentioned two playlist files based on HLS), and distributes them to the client terminal 10.

The data communication apparatus 20 is an apparatus that relays the communication between the client terminal 10 and the distribution source server 30, and performs pacing processing as well. As shown in Fig.4, the data communication apparatus 20 comprises a transmission-reception part 201 and a pacing part 202.

The transmission-reception part 201 is a means that transmits and receives data between the client terminal 10 and the distribution source server 30. The transmission-reception part 201 operates as a proxy (proxy server) for the distribution source server 30. That is, the transmission-reception part 201 acts as a server for the client terminal 10 and as a client for the distribution source server 30. The transmission-reception part 201 performs address conversion for realizing a proxy and communication control (for example, session establishment, data transmission rate change) with the client terminal 10 and the distribution source server 30. The transmission-reception part 201 transmits the received data from the distribution source server 30 to the terminal 10 according to a data transmission scheme determined by a data transmission method determination part 213 which will be described later.

The pacing part 202 is a means that performs pacing process according to the data transmission / reception status. More concretely, the pacing part 202 determines (controls data transfer) the data transmission scheme to the client terminal 10 by the transmission-reception part 201 based on whether or not the received data from the distribution source server 30 is based on the ABR distribution scheme, and on whether or not the received data from the distribution source server 30 maintains the regularity of the ABR distribution scheme.

The pacing part 202 is configured by comprising an ABR determination part 211, a regularity determination part 212, and a data transmission scheme determination part 213.

The ABR determination part 211 is a means that determines whether or not the data transmission scheme from the distribution source server 30 to the client terminal 10 is based on the ABR distribution scheme (a first determination part).

The regularity determination part 212 determines whether or not the received data from the distribution source server 30 maintains the regularity of the ABR distribution scheme in a case where the data transmission from the distribution source server 30 to the client terminal 10 is based on the ABR distribution scheme (a second determination part).

The data transmission scheme determination part 213 is a means that determines the data transmission scheme upon transmitting the received data from the distribution source server 30 to the client terminal 10 according to a determination result of the regularity determination part 212 (scheme determination part).

Concretely, the data transmission scheme determination part 213 instructs to the transmission-reception part 201 to transmit the received data from the distribution source server 30 to the terminal 10 by performing a bandwidth limitation (bandwidth control, data transmission speed control) in a case where the result of the determination by the regularity determining part 212 is that the ABR distribution scheme has the regularity. As described above, the data transmission scheme determination part 213 implements a pacing process suitable for ABR traffic. Note that a pacing rate (data transmission rate) used in the case of ABR traffic is set in advance, and instructs to the transmission-reception part 201 to perform data transmission at that rate. Alternatively, as disclosed in Patent Literature 2, the data transmission scheme determination part 213 may calculate an optimal transmission bit rate from a file length or the like, and instructs to the transmission-reception part to transmit each of divided files in accordance with the bit rate. Alternatively, in a case where the data communication apparatus 20 can acquire information on a bit rate (bit rate of the content) selected by the client terminal 10, the data transmission scheme determination part 213 may determines the transmission bit rate of the received data based on the acquired bit rate.

In a case where the result of the determination by the regularity determining part 212 is that there is no regularity for the ABR distribution scheme, the data transmission scheme determining part 213 instructs to the transmission-reception part 201 to release the bandwidth limitation applied to ABR traffic and transmit the received data from the distribution source server 30 to the client terminal 10.

### [Hardware configuration]

Next, a hardware configuration of the data communication apparatus 20 will be described.

Fig.5 is a block diagram showing an example of the hardware configuration of the data communication apparatus 20 according to the first exemplary embodiment. The data communication apparatus 20 comprises a configuration illustrated in Fig.5. For example, the data communication apparatus 20 comprises a CPU (Central Processing Unit) 21, a memory 22, an input and output interface 23, a NIC (Network Interface Card) 24 being a communication interface, and a wireless antenna 26 that is connected to transmission-reception circuit 25 and the like, which are mutually connected using internal BUS.

However, the configuration shown in Fig.5 is not intended to limit the hardware configuration of the data communication apparatus 20. The data communication apparatus 20 may include a hardware (not shown), or may not include the input and output interface 23 and the like as necessary. For example, in a case where input and output of information in the data communication apparatus 20 is performed by an operation terminal connected via the network, the input and output interface 23 may not be necessary. Also, a number of CPUs and the like included in the data communication apparatus 20 is not limited to the example shown in Fig.5, so that for example, a plurality of CPUs 21 may be included in the data communication apparatus 20.

The configuration shown in Fig.5 corresponds to a case where the client terminal 10 and the data communication apparatus 20 are wirelessly connected and the distribution source server 30 and the data communication apparatus 20 are connected by wire. Therefore, in a case where the connection method with the client terminal 10 or the like is different, the configuration shown in Fig.5 may naturally change. For example, in a case where the client terminal 10 and the data communication apparatus 20 are connected by wire, the transmission-reception circuit 25 is not necessary.

The memory 22 is a random access memory (RAM), a read only memory (ROM), or an auxiliary storage device (such as a hard disk).

The input-output interface 23 is an interface of a display apparatus or an input device (not shown). The display apparatus is, for example, a liquid crystal display or the like. The input device is, for example, a device that receives a user operation such as a keyboard or a mouse, or a device that inputs information from an external storage device such as a USB (Universal Serial Bus) memory. The user inputs necessary information to the data communication apparatus 20 using a keyboard, a mouse, or the like.

The transmission-reception circuit 25 is a circuit for realizing wireless communication with the client terminal 10, and transmits / receives a wireless signal via the wireless antenna 26.

A function(s) of the data communication apparatus 20 are realized by the above-described processing modules (the transmission-reception part 201, the pacing part 202, and the like). The processing modules are realized, for example, by the CPU 21 executing a program stored in the memory 22. Also, the program can be downloaded via the network or updated using a storage medium storing the program. Further, the processing modules may be realized by a semiconductor chip. That is, the functions performed by the processing module may be realized by executing software on some hardware.

### [Explanation of an operation]

Fig.6 is a flowchart showing an example of an operation(s) of the data communication apparatus 20.

First, the transmission-reception part 201 receives a session establishment request from the client terminal 10 to the distribution source server 30 (Step S01).

The transmission-reception part 201 transmits a request for establishing a session to the distribution source server 30 (step S02).

Thereafter, the transmission-reception part 201 receives data from the distribution source server 30, and buffers the received data for a predetermined period (Step S03). After that, the transmission-reception part 201 transmits the buffered received data (received packet) to the ABR determination part 211.

The ABR determination part 211 determines whether or not the received data is ABR traffic, and passes the determination result and the received data from the transmission-reception part 201 to the regularity determination part 212 (Step S04). That is, the ABR determination part 211 determines whether or not the data transmission scheme from the distribution source server 30 to the client terminal 10 is based on the ABR distribution scheme.

The above mentioned determination by the ABR determination part 211 is performed utilizing the above two features that ABR traffic has. Concretely, the ABR determination part 211 determines the data amount (No. 3 in Table 1: data amount in measurement term unit) of the received data from the distribution source server 30 for each predetermined term (No. 1 in Table 1; measurement term unit). Further, the ABR determination part 211 calculates a term related to the measurement term unit in which the data amount in the measurement term unit is larger than a predetermined threshold value (No. 4 in Table 1; minimum data amount in communicating term unit) continues as a data communicating term (No.5 in Table 1), and another term related to the measurement term unit in which the data amount in measurement term unit is equal or smaller than the predetermined threshold value continues as a no-communicating term (No. 6 in Table 1). Further, the ABR determination part 211 calculates the data communicating term and the no-communicating term as one cycle term. The ABR determination part 211 further calculates the data amount (No. 8 in Table 1; cycle data amount) in the data communicating term. Thereafter, the ABR determination part 211 detects that the no-communicating term can be detected after the data communicating term (the first feature), and that the data amount in the data communicating term is substantially the same in the preceding and following cycle terms (the second feature) are detected over a predetermined term length (several cycle terms), the received data is determined to be ABR traffic (the received data is determined to be the data transmitted by the ABR distribution scheme). More concrete determination method will be described later.

The regularity determination part 212 determines whether or not the regularity of ABR traffic is maintained based on a result of the determination by the ABR determination part 211 and a reception status of the received data, and passes the result of the determination and the received data to the data transmission scheme determination part 213 (Step S05).

The data communication apparatus 20 performs data transmission according to whether or not the regularity of ABR traffic is maintained (Step S06). Concretely, the data transmission scheme determination part 213 determines the data transmission scheme upon transmitting the received data to the client terminal 10 based on a determination result of the regularity determination part 212, and instructs to transmission-reception part to transmit the data according to the determined scheme.

In a case where the determination obtained from the regularity determination part 212 is "regularity is maintained", the data transmission scheme determination part 213 determines that pacing process should be performed.
In this case, the data transmission scheme determination part 213 instructs to the transmission-reception part 201 to transmit the received data from the distribution source server 30 to the client terminal 10 according to the data transmission scheme suitable for ABR traffic. More specifically, for example, the data transmission scheme determination part 213 instructs to the transmission-reception part 201 to perform data transmission at a preset pacing rate (bit rate).

On the other hand, in a case where the determination by the regularity determination part 212 is "regularity is not maintained (disappeared)", the data transmission scheme determination part 213 determines that pacing processing should not be performed. In this case, the data transmission scheme determination part 213 instructs to the transmission-reception part 201 to transmit the received data (the data buffered in the data communication apparatus 20) from the distribution source server 30 to the client terminal 10 without setting the bandwidth limitation. As described above, in the case where the regularity of ABR traffic is not maintained, the data transmission scheme determination part 213 releases the bandwidth limitation by the data transmission scheme suitable for ABR traffic.

Next, a description will be given on how the ABR determination part 211 determines whether or not the traffic is ABR traffic. Fig.7 is a flowchart showing an example of an operation(s) of the ABR determination part 211.

The ABR determination part 211 detects a cycle term (No. 7 in Table 1 and Fig.3) that is specific to ABR traffic using the stored received data (Step S101). Concretely, the ABR determination part 211 integrates a data amount (received packet) in a measurement term unit (No.1 in Table 1 and Fig.3), and accumulates the data amount in measurement term unit (No.3 in Table 1 and Fig.3). is calculated. Thereafter, the ABR determination part 211 compares the data amount in measurement term unit with the minimum data amount in communicating term (No.4 in Table 1 and Fig.3), and determines whether the measurement term unit is a communicating term (No.5 in Table 1 and Fig.3). or a no-communicating term (No.6 in Table 1 and Fig.3). Thereafter, the ABR determination part 211 calculates the cycle (No.7 in Table 1 and Fig.3) in which a continuous communicating term and a continuous no-communicating term are set as one set. The ABR determination part 211 acquires a waveform information as shown in Fig.3 by repeating the above-described processing on the accumulated (buffered) received data.

Next, the ABR determination part 211 determines whether or not an ABR traffic feature exists in each cycle term by executing the processing of steps S102 to S106 for each of the detected cycle term.

In step S102, the ABR determination part 211 determines whether or not a data amount in cycle term (No.8 in Table 1) in the determination target cycle term is larger than a maximum data amount in cycle term (predetermined threshold). In a case where the data amount in cycle term is larger than the maximum data amount in cycle term (step S102, Yes branch), the cycle to be determined is determined to be "no feature of ABR traffic" (step S107). In a case where the data amount in cycle term is equal or smaller than the maximum data amount in cycle term (step S102, No branch), the process of step S103 is executed.

In step S103, the ABR determination part 211 determines whether or not the cycle length of the determination target cycle term (No.9 in Table 1) is longer than the maximum cycle length. In a case where the cycle length is longer than the maximum cycle length (step S103, Yes branch), the cycle to be determined is determined to be "no feature of ABR traffic" (step S107). In a case where the cycle length is equal or less than the maximum cycle length (step S103, No branch), the process of step S104 is executed.

In step S104, the ABR determination part 211 determines whether or not a transition from the no-communicating term to the communicating term in a next cycle term has occurred. In a case where the transition (change) from the no-communicating term to the communication term has not occurred (step S104, No branch), it means that the no-communicating term continues. Accordingly, since the communication between the client terminal 10 and the distribution source server 30 is not actually performed, the process is terminated. In a case where the transition from the no-communicating term to the communicating term has occurred (step S104, Yes branch), the processing of step S105 is executed.

In step S105, the ABR determination part 211 determines whether or not the cycle data amount change rate (No. 10 in Table 1) is equal or less than the maximum cycle data amount change rate.
In a case where the cycle amount change rate is larger than the maximum cycle data amount change rate upper limit (step S105, No branch), the cycle to be determined is determined to be "no feature of ABR traffic" (step S107).
In a case where the cycle data amount change rate is equal or less than the maximum cycle data amount change rate (step S105, Yes branch), the process of step S106 is executed.

For example, in FIG. 3, in a case where the cycle term illustrated as the first cycle is the cycle to be determined, the change rate of the cycle data amount of the cycle term and the subsequent cycle term (cycle term described as the second cycle) is calculated. In a case where the change rate is equal to or less than a predetermined threshold value (maximum change rate of the cycle data amount), the above-mentioned second feature that the received data amount in two consecutive cycles term is substantially the same is met. In other words, in a case where the rate of change of the cycle data amount exceeds the maximum amount, it is determined that the feature of the ABR traffic does not appear in the cycle term.

In step S106, the ABR determination part 211 determines whether or not the cycle length change rate (No. 11 in Table 1) is equal to or less than the maximum cycle length change rate. In a case where the cycle length change rate is larger than the maximum cycle length change rate (step S106, No branch), the cycle to be determined is determined to be "no feature of ABR traffic" (step S107). In a case where the cycle length change rate is equal to or less than the maximum cycle length change rate (step S106, Yes branch), the cycle term to be determined is determined to be "ABR traffic feature" (step S108).

For example, in Fig.3, in a case where the cycle term indicated as the first cycle term is the cycle term to be determined, the rate of change in the cycle length between the cycle term and the subsequent cycle term (cycle term indicated as the second cycle term) is calculated.
In a case where the rate of change is equal to or less than a predetermined threshold (maximum cycle length change rate), it is determined that the cycle has a feature of ABR traffic.

When the determination of the cycle term to be determined is completed, the ABR determination part 211 checks whether or not there are any remaining cycle terms to be determined (step S109). In a case there remains a cycle term to be determined, the ABR determination part 211 changes the cycle term to be determined (step S110), and repeats the processings from step S102. In a case where there are no cycle terms to be determined, the process of step Sill is performed.

In step Sill, the ABR determination part 211 determines whether or not the received data is ABR traffic based on the determination result of each cycle term (has feature of ABR, or no feature of ABR). For example, in a case where a ratio of the cycle terms determined to be "has feature of ABR "is equal or greater than a predetermined value, the received data is determined as "ABR", in other case the received data is determined as "non-ABR".

Next, an operation(s) of the regularity determining part 212 will be described with reference to the drawings. Fig.8 is a flowchart showing an example of the operations of the regularity determination part 212. Here, it is assumed that the regularity determination part 212 has already obtained the result of the ABR determination part 211 on whether or not the received data in a certain session is based on ABR traffic. Note that, the regularity determining part 212 receives the data of the same session from the ABR determining part 211 at any time, and the data waiting to be processed is stored in an internal storage area (for example, in a memory or a register) of the regularity determining part 212.

The regularity determination part 212 confirms a content of the determination result from the ABR determination part 211 (Step S201).

In a case where the determination result from the ABR determination part 211 is "non-ABR" indicating that the traffic is not ABR traffic, the regularity determination part 212 notifies the determination result from the ABR determination part 211 and the received data to the data transmission scheme determination part 213 (Step S202), and the process terminates.

On the other hand, in a case where the determination result from the ABR determination part 211 is "ABR" indicating that the traffic is ABR traffic, the regularity determination part 212 determines to set a mode indicating whether or not the regularity of the session is maintained (the regularity of ABR traffic is maintained or disappeared) (Step S203).

The mode is set to "maintained" in a case where it is determined that the regularity of ABR traffic is maintained, and is set to "disappeared" in a case where it is determined that the regularity has disappeared. Note that in a process recently after receiving from the ABR determination part 211, the mode is set to "maintained".

Next, the regularity determining part 212 cuts out data for one cycle term from the received data (Step S204). The regularity determination part 212 realizes the cut-out (determination) of the one cycle term by confirming a change in the data amount (data amount in measurement term unit) for each measurement term unit. Concretely, as shown in Fig.3, in ABR traffic, after measurement term units in which data exist continues, measurement term units in which no data exist continues sequentially. Thereafter, measurement term units in which data exist continues sequentially appears, again. The regularity determination part 212 regards the measurement term units in which data exist and the measurement term units in which data does not exist as one cycle term. Note that the regularity determination part 212 determines that "data do not exist" in a case where the data amount in measurement term unit is equal or smaller than the minimum data amount in communicating term unit.

Next, the regularity determination part 212 confirms the mode (Step S205).

In a case where the mode is "disappeared", the regularity determination part 212 determines whether or not the regularity of ABR traffic can be detected from the data in the cut-out cycle term (Step S206). In other words, the regularity determination part 212 determines whether or not the regularity of ABR traffic is restored.

A concrete example of the method of detecting the regularity will be described with reference to Fig.9.

Fig.9(a) shows an example of a case where the regularity of ABR traffic has been detected. Fig.9(b) shows an example of a case where the regularity of ABR traffic has not been detected.

As shown in Fig.9(b), in a case where the regularity is detected only in the most recent cycle term, it is not determined that the regularity is maintained. On the other hand, in a case where the regularity of ABR traffic is detected at least two consequent cycle terms (Fig.9(a)), it is determined that the regularity is maintained. That is, the regularity determination part 212 determines that the regularity of ABR traffic exists in the received data in a case where the features unique to ABR traffic is detected at two consequent cycle terms (two consecutive cycle terms) in the received data.

In the example of Fig.9, a threshold value for determination of the regularity is set to "2", however it is needless to say that the threshold value is not intended to limit to "2". Also, in order to realize the above described determination, the regularity determination part 212 stores information (cycle data amount and cycle length) for at latest two recent cycle terms in the storage area (memory, register, etc.).

Here, in ABR traffic, concerning on the cycle data amount and the cycle length, they merely change for each cycle term, and the cycle data amount is equal or less than maximum cycle data amount change ratio, and the cycle length is equal or less than the maximum cycle length change ratio. Therefore, the regularity determination part 212 utilizes a result of determination whether or not the cycle data amount and the cycle length in the cycle term to be processed are substantially equal to the cycle data amount and the cycle length of the recent cycle (equal or smaller than maximum cycle data amount change ratio, and equal or smaller than maximum cycle length change ratio) for detecting the regularity in ABR traffic. That is, the regularity determination part 212 uses the maximum cycle data amount change ratio and the maximum cycle length change ratio to determine whether or not the received data have the features of ABR traffic (the first feature and the second feature described above).

Furthermore, in a case where number of times that the received data is determined to be ABR traffic continues for a predetermined number of times or more (two times in the above example), the regularity determination part 212 determines that the regularity of ABR traffic exists.

As described above, the regularity determination part 212 extracts the features of the data based on the ABR distribution scheme from the received data by like the same method as the ABR determination part 211 (calculate data communicating term, no-communicating term, cycle term, cycle data amount, etc.). Thereafter, the regularity determination part 212 determines that the regularity of the ABR distribution scheme is maintained, in a case where the change ratio of the data amount in the preceding and following cycle terms (a first cycle term and a second cycle term following the first cycle) is smaller than a first upper limit (No. 10 in Table 1; maximum cycle data amount change ratio), and the change ratio of the cycle length of the second cycle with respect to the length of the first cycle is smaller than a second upper limit (No. 11 in Table 1; maximum cycle length change ratio),

Referring back to Fig.8, in a case where the mode is "maintaining", the regularity determination part 212 determines whether or not the regularity of ABR traffic has disappeared (Step S207). In other words, the regularity determination part 212 determines whether or not the regularity of ABR traffic has temporarily disappeared.

A concrete example of a determining method whether or not the regularity has disappeared will be described with reference to Fig.10.

Fig.10(a) shows an example in which it is determined that the regularity of ABR traffic has disappeared. Fig.10(b) shows an example in which it is not determined that the regularity of ABR traffic has disappeared.

As shown in Fig.10(b), in a case where the regularity has not been detected only in the most recent cycle term, it is not determined that the regularity of ABR traffic has disappeared. On the other hand, in a case where no regularity has been detected in two consecutive cycle terms (Fig.10(a)), it is determined that the regularity has disappeared.

Note that in order to realize the above mentioned determination, the regularity determination part 212 also uses the stored information (cycle data amount and cycle length) for the recent two cycle terms in the above processing. Referring to Fig.10(a), the cycle length of the two cycle terms before is longer, and exceeds the maximum cycle length change ratio. Further, the cycle data amount in the most recent cycle term is large, and exceeds the maximum cycle data amount change ratio.

From these results, since no regularity has been detected in two consecutive cycle terms, the regularity determination part 212 determines that the regularity of ARB traffic has disappeared.

In the example of Fig.10, a threshold value for determining that the regularity has disappeared is set to "2", however, it is needless to say that the threshold value is not intended to limit to "2".

As described above, the regularity determination part 212 determines whether or not on existing of the regularity of the ABR distribution scheme, on the basis of the feature related to the cycle length and the feature related to the data amount in the data communicating term in the received data transmitted by the ABR distribution scheme.

Referring back to Fig.8, the regularity determination part 212 changes the mode according to the determination result (maintained, or disappeared) related to the regularity of ABR traffic (Step S208).

Thereafter, the regularity determination part 212 notifies to the data transmission scheme determination part 213 on the determination result (ABR, non-ABR) by the ABR determination part 211 and on the determination result (maintained, or disappeared of the regularity of ABR traffic) by the regularity determination part 212. (Step S209).

Further thereafter, it is confirmed whether the regularity determination part 212 continuously receives the data of the session (in the same session) (Step S210), and in a case where it receives the data of the session, the process proceeds to the next cycle (Step S211). On the other hand, in a case where the data of the session do not exist, the regularity determination part 212 terminates the processing(END). As described, the regularity determining part 212 determines whether or not the received data maintain the regularity of the ABR distribution scheme for the data of the same session.

As described above, the data communication apparatus 20 according to the first exemplary embodiment determines whether or not the regularity exists during the ABR traffic transmission, and determines whether or not to apply the pacing process according to the determination result. More concretely, even in a case where the ABR determination part 211 determines that the received data is ABR traffic, the data communication apparatus 20 always operates the regularity determination part 212, and determine whether or not maintaining the regularity of ABR traffic. In a case where it is determined that the regularity of ABR traffic is not maintained, the data transmission scheme (bandwidth limitation at the predetermined bit rate) suitable for ABR traffic is canceled, and the data communication apparatus 20 transmits the received data collectively to the client terminal 10.

That is, in the first exemplary embodiment, in order to realize maintaining QoE for the user, even in a situation where the network environment is suddenly deteriorated, a case is presumed in which the regularity of ABR traffic disappears through an external disturbance generated after the received data has been once determined to be the ABR traffic. Based on the presumption, the data communication apparatus 20 determines whether the regularity of ABR traffic is maintained before the pacing process for transmitting data to the client terminal 10. As a result, even in the situation of sudden occurrence of a case where the client terminal 10 cannot receive the packets in the expected regularity of ABR traffic in the normal environment, for example, the interval of receiving data from the distribution source server 30 becomes vacant longer than expected, deterioration of QoE for the user can be prevented.

For example, as shown in Fig.11, in a case where the network environment is deteriorated during the ABR traffic transmission, and the received data is interrupted, the data communication apparatus 20 determines that the regularity of ABR traffic has disappeared. As a result, the data communication apparatus 20 can stop the pacing process and transmit the data stored in the apparatus to the client terminal 10 all at once (collectively). Therefore, the buffer of the client terminal 10 can be filled instantaneously, so that the buffer exhaustion in the client terminal 10 is limited to one time.

That is, as is clear from the comparison between Fig.11 and Fig.12, the user will not be intermittently interrupted in viewing the video image, but is limited to have experience only one interruption in viewing video image. That is, by using the data communication apparatus 20 according to the first exemplary embodiment, it is possible to minimize the deterioration of QoE even in the case of sudden deterioration of the network environment.

In the plurality of flowcharts used in the above description, a plurality of steps (processes) are described in order, but the execution order of the steps executed in each exemplary embodiment is not limited to the described order. In each exemplary embodiment, the order of the illustrated steps can be changed within a range that does not hinder the contents, such as executing each processing in parallel. In addition, each of the above-described exemplary embodiments can be combined in a range where the contents do not conflict with each other.

Although the industrial applicability of the present invention is clear from the above description, the present invention suitably applicable to a communication flow control system for mobile communication (cellular network) by SSL communication between a mobile apparatus and a video distribution service, and the like. Further, instead of the cellular network, the present invention can also be used for communication flow control by SSL communication through various access networks such as a wireless or wired LAN (Local Area Network) and an optical fiber.

### [MODES]

Part or entirety of the above-mentioned exemplary embodiments can be described as following modes but are not limited to the followings.

### <Mode 1>

A data communication apparatus according to the first aspect described above.

### <Mode 2>

The data communication apparatus preferably according to mode 1, wherein the scheme determination part is configured to instruct to the transmission-reception part to transmit the received data from the server to the client terminal, by performing a bandwidth limitation that is suitable for the ABR distribution scheme, in a case where a determination result of the second determination part is "maintaining regularity".

### <Mode 3>

The data communication apparatus preferably according to mode 2, wherein the scheme determination part is configured to instruct to the transmission-reception part to transmit the received data from the server to the client terminal, by canceling the bandwidth limitation, in a case where the determination result of the second determination part is "not maintaining regularity".

### <Mode 4>

The data communication apparatus preferably according to any one of modes 1 to 3, wherein the second determination part is configured to: measure a data amount related to the received data from the server per a predetermined measurement term unit, calculate one term as a data communicating term in which the measurement term unit where the measured data amount is larger than a predetermined threshold value continues, and another term as a no-communicating term in which the measurement term where the measured data amount is equal or smaller than the predetermined threshold value continue, and set a cycle term as a term length from the data communicating term to the no-communicating term, and determine whether or not maintaining the regularity of the ABR distribution scheme, based on a first feature related to a cycle length of the cycle term, and on a second feature related to a data amount in the data communicating term.

### <Mode 5>

The data communication apparatus preferably according to mode 4, wherein the second determination part is configured to: determine that the ABR distribution scheme maintains regularity in a case where a change ratio of the data amount between a first cycle term and a second cycle term which sequences to the first cycle term is smaller than a first upper limit value, and a change ratio of the cycle length between the first cycle term and the second cycle term is smaller than a second upper limit value.

### <Mode 6>

The data communication apparatus preferably according to any one of modes 1 to 5, wherein the transmission-reception part is configured to operate as a proxy for the server.

### <Mode 7>

The data communication apparatus preferably according to any one of modes 1 to 6, wherein the second determination part is configured to determine whether or not the received data maintains regularity of the ABR distribution scheme, wherein the received data are limited to be in a same session.

### <Mode 8>

A communication system according to the second aspect described above.

### <Mode 9>

A data communication method according to the third aspect described above.

### <Mode 10>

A program according to the fourth aspect described above.

Note that modes 8 to 10 are possible to be extended likewise in case of mode 1, which is extended to modes 2 to 7.

Each disclosure of the above-mentioned Patent Literatures and so on that have been cited is incorporated herein in its entirety by reference. Modification and adjustment of each exemplary embodiment or each example are possible within the scope of the overall disclosure (including the claims) of the present invention and based on the basic technical concept of the present invention. Various combinations or selections (including partial deletion) of various disclosed elements (including each element in each claim, each element in each exemplary embodiment or each example, and each element in each drawing) are possible within the scope of the overall disclosure of the present invention. That is, the present invention naturally includes various variations and modifications that could be made by those skilled in the art according to the overall disclosure including the claims and the technical concept. With respect to numerical value range(s) described herein in particular, arbitrary numerical value(s) and a small range(s) included in the numerical value range should be construed to be specifically described even unless otherwise explicitly described.

### [REFERENCE SIGNS LIST]

- 10: Client terminal
- 20,100: Data communication apparatus
- 21: CPU
- 22: Memory
- 23: Input and output interface
- 24: NIC
- 25: Transmission-reception circuit
- 26: Wireless antenna
- 30: Distribution source server
- 101,201: Transmission-reception part
- 102: First determination part
- 103: Second determination part
- 104: Scheme determination part
- 202: Pacing part
- 211: ABR determination part
- 212: Regularity determination part
- 213: Data transmission scheme determination part
- 301: No-communicating term
- 311,312: Cycle term

## Claims

1. A data communication apparatus, comprising:
a transmission-reception part configured to transmit and receive data between a client terminal and a server,
a first determination part configured to determine whether or not a data transmission from the server to the client terminal is based on an ABR (Adaptive Bit Rate) distribution scheme,
a second determination part configured to determine whether or not a received data from the server maintains regularity of the ABR distribution scheme, in a case where the data transmission from the server to the client is based on the ABR distribution scheme,
a scheme determination part configured to determine the data transmission scheme upon transmitting the received data from the server to the client terminal according to a result by the second determination part, wherein
the transmission-reception part is configured to transmit the received data from the server to the client by the data transmission scheme determined by the scheme determination part.

2. The data communication apparatus according to claim 1, wherein
the scheme determination part is configured to instruct to the transmission-reception part to transmit the received data from the server to the client terminal, by performing a bandwidth limitation that is suitable for the ABR distribution scheme, in a case where a determination result of the second determination part is "maintaining regularity".

3. The data communication apparatus according to claim 2, wherein
the scheme determination part is configured to instruct to the transmission-reception part to transmit the received data from the server to the client terminal, by canceling the bandwidth limitation, in a case where the determination result of the second determination part is "not maintaining regularity".

4. The data communication apparatus according to any one of claims 1 to 3, wherein
the second determination part is configured to:
measure a data amount related to the received data from the server per a predetermined measurement term unit,
calculate one term as a data communicating term in which the measurement term unit where the measured data amount is larger than a predetermined threshold value continues, and another term as a no-communicating term in which the measurement term where the measured data amount is equal or smaller than the predetermined threshold value continue, and set a cycle term as a term length from the data communicating term to the no-communicating term, and
determine whether or not maintaining the regularity of the ABR distribution scheme, based on a first feature related to a cycle length of the cycle term, and on a second feature related to a data amount in the data communicating term.

5. The data communication apparatus according to claim 4, wherein
the second determination part is configured to:
determine that the ABR distribution scheme maintains regularity in a case where a change ratio of the data amount between a first cycle term and a second cycle term which sequences to the first cycle term is smaller than a first upper limit value, and a change ratio of the cycle length between the first cycle term and the second cycle term is smaller than a second upper limit value.

6. The data communication apparatus according to any one of claims 1 to 5, wherein
the transmission-reception part is configured to operate as a proxy for the server.

7. The data communication apparatus according to any one of claims 1 to 6, wherein
the second determination part is configured to determine whether or not the received data maintains regularity of the ABR distribution scheme, wherein the received data are limited to be in a same session.

8. A communication system, comprising:
a client terminal,
a server,
a data communication apparatus configured to relay data between the client terminal and the server, wherein
the data communication apparatus comprises:
a transmission-reception part configured to transmit and receive data between the client terminal and the server,
a first determination part configured to determine whether or not a data transmission from the server to the client terminal is based on an ABR (Adaptive Bit Rate) distribution scheme,
a second determination part configured to determine whether or not a received data from the server is maintaining regularity of the ABR distribution scheme, in a case where the data transmission from the server to the client is based on the ABR distribution scheme,
a scheme determination part configured to determine the data transmission scheme upon transmitting the received data from the server to the client terminal according to a result by the second determination part, wherein
the transmission-reception part is configured to transmit the received data from the server to the client by the data transmission scheme determined by the scheme determination part.

9. A data communication method for a data communication apparatus that comprises a transmission-reception part which transmits and receives data between a client terminal and a server, comprising:
a step of ABR determining whether or not a data transmission from the server to the client terminal is based on an ABR (Adaptive Bit Rate) distribution scheme,
a step of maintaining regularity determining whether or not a received data from the server is maintaining regularity of the ABR distribution scheme, in a case where the data transmission from the server to the client is based on the ABR distribution scheme,
a step of scheme determining the data transmission scheme upon transmitting the received data from the server to the client terminal according to a result of maintaining regularity determining, and
a step of transmitting the received data from the server to the client by the data transmission scheme determined by the scheme determining.

10. A program executed by a computer installed to a data communication apparatus that comprises a transmission-reception part which transmits and receives data between a client terminal and a server, comprising:
a process of ABR determining whether or not a data transmission from the server to the client terminal is based on ABR (Adaptive Bit Rate) distribution scheme,
a process of maintaining regularity determining whether or not a received data from the server is maintaining regularity of the ABR distribution scheme, in a case where the data transmission from the server to the client is based on the ABR distribution scheme,
a process of scheme determining the data transmission scheme upon transmitting the received data from the server to the client terminal according to a result of maintaining regularity determining, and
a process of transmitting the received data from the server to the client terminal by the data transmission scheme determined by the process of transmission scheme determining.
